# EUROPEAN PATENT SPECIFICATION

(11) **EP 1 495 260 B1**
(45) Date of publication and mention of the grant of the patent: **24.09.2008**
(21) Application number: 03720876.6
(22) Date of filing: 11.04.2003
(51) Int. Cl.: F21V 21/29

(54) **ARTICULATED MECHANICAL DEVICE PARTICULARLY FOR LIGHTING APPARATUSES**
MECHANISCHE GELENKVORRICHTUNG INSBESONDERE FÜR BELEUCHTUNGSGERÄTE
DISPOSITIF MECANIQUE ARTICULE, DESTINE EN PARTICULIER A DES APPAREILS D'ECLAIRAGE

(30) Priority: 12.04.2002 IT BS20020038
(43) Date of publication of application: 12.01.2005
(73) Proprietor: Colosio, Livio, 25049 Iseo (BS) (IT); Colosio, Fabio, 25049 Iseo (BS) (IT); Gregorelli, Roberto, 25062 Concesio (BS) (IT)
(72) Inventor: GREGORELLI, Roberto, I-25062 Concesio (Brescia) (IT)
(74) Representative: Galassi, Alessandro
(86) International application number: PCT/IT2003/000228
(87) International publication number: WO 2003/087666

(56) References cited:
- DE-A- 2 538 668
- FR-A- 920 230
- GB-A- 1 438 760
- US-A- 2 859 983
- US-A- 3 278 203
- US-A- 4 322 098

## Description

The present invention relates to an articulated mechanical device, in particular for lighting apparatuses.

It is known that an articulated connection between two rigid parts such as the bearing structure and a lamp-holding body for a lighting apparatus, is generally made by use of an articulated device enabling shifting of the latter relative to the former; with formation of angles contained within varying limits. For example, some known articulated devices enable the lamp-holding body to be rotated relative to the base structure through an angle not exceeding 90°. Externally of the articulated devices other turning couplings can be provided that are able to allow rotation through about 360° around the longitudinal axis of the base structure.

An articulated device of the above mentioned type is generally formed of a central body having a tubular conformation, a front attachment element to be fastened to a lamp-holding body, a spotlight for example, and articulated relative to the central body to enable angling of same, and a rear attachment element or unit for engagement with a rear portion of the central body and with the bearing structure of a lamp. Both the front attachment element and the rear attachment unit, as well as obviously the central body, are internally hollow so that electric conductors can run therethrough.

The front attachment element comprises a root to be coupled with the central body and a normally threaded shank for engagement with the lamp-holding body.

More specifically, the root in turn comprises a base portion having at least two opposite flat faces and an end block substantially of spherical shape. The end block is adapted to abut against a concave locating seat formed at a front end of the central-body cavity, so as to form a turning coupling therewith.

Then the central body, in addition to having a front opening of appropriate sizes for passage both of the shank and the base portion of the root during the assembling step, also has a side split in the extension of said front opening, which is adapted to enable angular displacements of the front attachment element relative to the longitudinal axis of the central body itself, and to guide the opposite flat faces of the root.

Practically, in the known art, the whole front attachment element is inserted, during the assembling step, into the cavity of the central body through a rear opening of the latter, so as to make the shank and part of the root base portion of the front attachment element emerge from the front opening and cause the end block of the root itself to abut against said concave locating seat. A spring element, a compression spring for example, also inserted in the central body, keeps the end block of the root pressed with suitable force against the locating seat and produces a sufficient friction between these parts so as to lock the front attachment element to the selected angle relative to the longitudinal axis of the central body.

After the above brief description of the articulated device of known type, it is possible to notice that the same has many limits and drawbacks.

In fact, since the whole front attachment element needs to pass through the cavity of the central body for mounting, the outer diameter of the shank threading, or in any case the shank diameter, must be smaller than the outer diameter of the central body. For example, if the central body has a 10 mm outer diameter, the diameter of the shank thread can be at most as large as about 8 mm.

Since in some applications a shank having a threading with a big diameter is required, articulated devices are to be adopted in which the diameter of the central body is proportionally increased, which will clearly bring about increases in costs and bulkiness. Then in this case also the aesthetic appearance is of modest value. In addition, a possible locating abutment often required at the shank base of the front attachment element, due to the above reasons can only be added subsequently, in the form of a threaded washer, and screwed on the shank itself. It should be also pointed out that, in order to enable the front attachment screw or at all events the shank to pass through the front opening of the central body, which opening matches the shape of the flat faces of the root base portion of the front attachment element itself, said front attachment element must be necessarily cut by milling in two opposite planes and is therefore greatly weakened relative to its original circular section. Finally, in the known art, rotation around the longitudinal axis of the central body is obtained by an articulation external to the articulated joint which is conveniently limited so that it does not overcome 360°, in order to avoid dangerous kinks of the electric conductors, by means of retaining elements in sight, such as threaded dowels screwed from the outside, that can be easily tampered with by the user giving rise to serious consequences in terms of electric safety.

Under this situation, the technical task underlying the present invention is to conceive an articulated mechanical device capable of substantially obviating the mentioned drawbacks.

Within the scope of this technical task it is an important aim of the invention to conceive an articulated device enabling provision of a shank of the front attachment element of any shape and size, independently of the diameter of the central body of the articulated device itself, thereby offering the possibility that, for example, said shank should have a threading of larger diameter than that of said central body and/or should be provided with an appropriate abutment ring, or should be integrated as a unitary piece with the lamp body to which is must be associated.

Another important aim of the invention is to conceive an articulated device also including a turning coupling for rotation of the central body around its longitudinal axis and retaining means not subjected to possible dangerous tampering and designed to prevent rotations beyond a round angle.

The technical task mentioned and the aims specified are substantially achieved by an articulated device, particularly for lighting apparatuses, which is characterized in that it comprises one or more of the technical solutions hereinafter claimed.

Description of a preferred but not exclusive embodiment of an articulated device in accordance with the invention will be given in the following by way of non-limiting example with the aid of the accompanying drawings, in which:
- Fig. 1 is a perspective view partly in phantom of an articulated mechanical device in accordance with the invention;

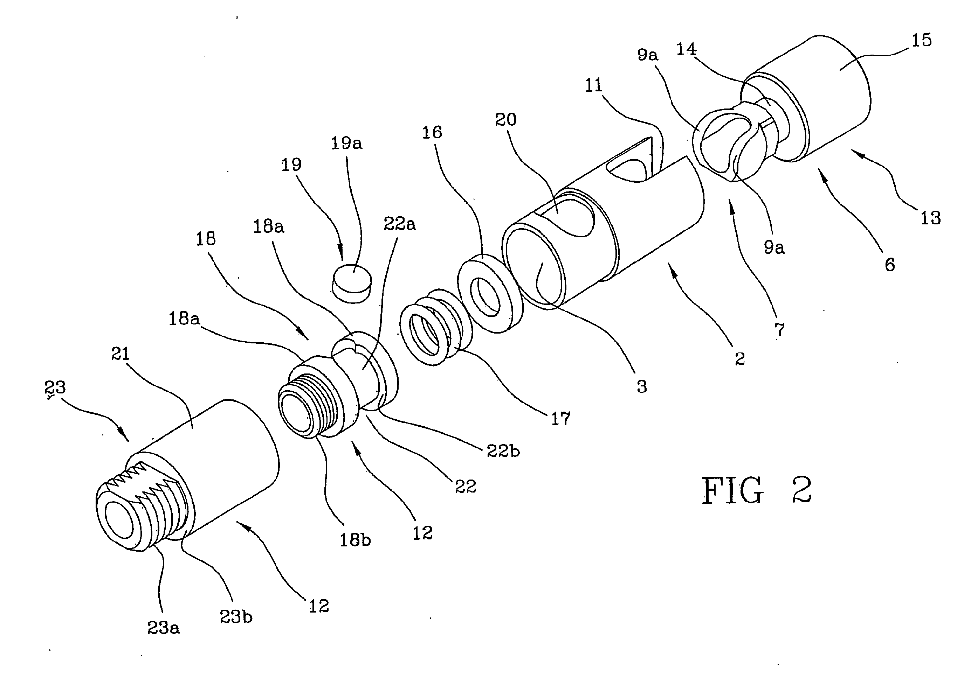

- Fig. 2 is an exploded perspective view of the device in Fig. 1;
- Figs. 3, 4 and 5 show a perspective view of the front attachment element and the central body of the device in successive assembling steps;
- Fig. 6 shows an enlarged perspective view of the locking means interposed between the central body and the rear attachment unit of the device;
- Fig. 7 is an exploded perspective view of an alternative embodiment of an articulated mechanical device in accordance with the invention;
- Fig. 8 is a longitudinal section view of the device in Fig. 7 in an assembled condition.

With reference to the drawings, the articulated device in accordance with the invention is denoted at 1.

It comprises a central body 2 having a substantially tubular conformation, i.e. having an inner cavity 3 provided with a front opening 4 and an opening 5a, at a rear portion 5.

The central body 2 can be associated with a front attachment element 6 which is internally hollow too so that it can be passed through by electric conductors, and comprising a root 7 formed of a base portion 8 and an end articulation block 9 insertable in the cavity 3 of the central body 2.

The end block 9 can abut against a locating seat 10 disposed in the cavity of the central body 2 close to the front opening 4, so as to create a turning coupling.

In addition, the central body 2 has, in the extension of the front opening 4, a side split 11 the shape of which matches that of the base portion 8 of root 7, to enable angular shiftings up to about 90° of the attachment element 6 relative to the longitudinal axis 2a of the central body 2 itself.

A rear attachment unit 12 to be described in the following can be engaged with the rear portion 5.

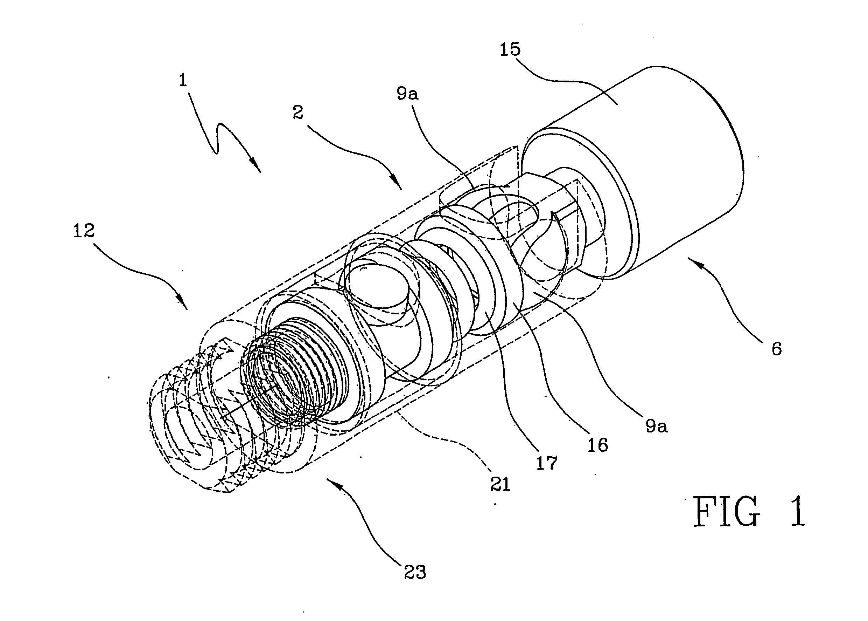

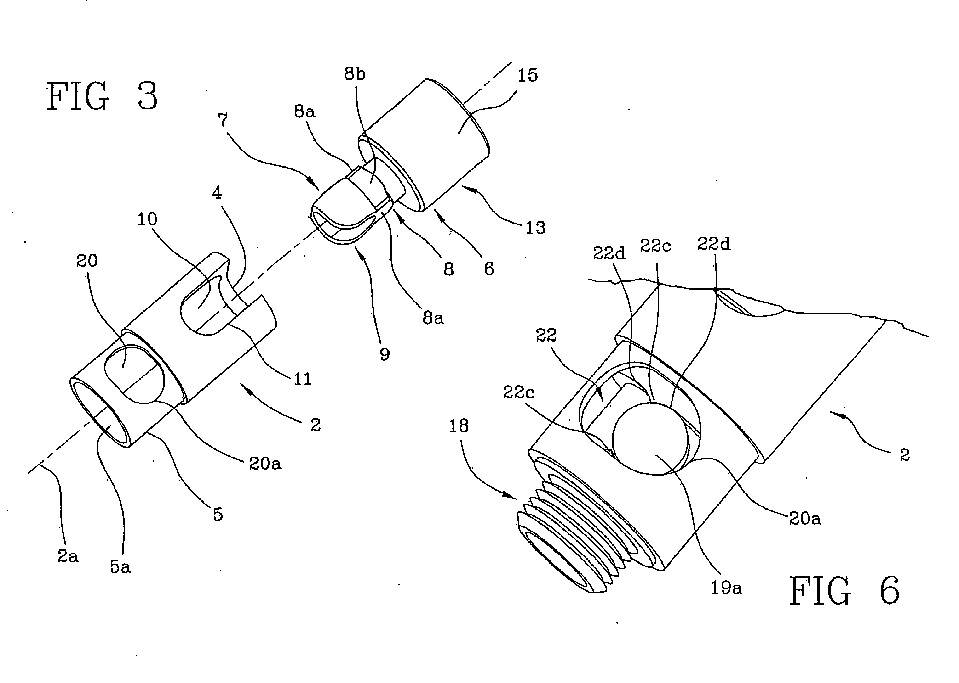

In an original manner, the articulation end block 9 seen in cross section with respect to the longitudinal axis 6a of the front attachment element 6, shows a flattened conformation substantially conforming in shape to the front opening 4 so that, during assembling, it can be inserted in the cavity 3 of the central body 2 through said front opening 4 after longitudinal alignment of the front attachment element itself 6 with respect to said central body 2 (see Fig. 3). In other words, the articulation end block 9 in a first longitudinal plane has a shape that does not project relative to the base portion 8 of root 7, whereas in a second longitudinal plane orthogonal to said first plane, it has a widened shape formed of two opposite expansions of convex conformation 9a designed to correspond in shape to the locating seat 10 after insertion of the end block itself into cavity 3 and following a rotation, of a quarter of a turn for example, of the front attachment element 6 around its longitudinal axis 6 (see Figs. 1, 4 and 5).

The base portion 8 of root 7 laterally has two pairs of opposite flat faces, i.e. a first pair of faces 8a and a second pair of faces 8b altogether defining a substantially square cross section the side of which corresponds to the width of the front opening 4 and of the side split 11.

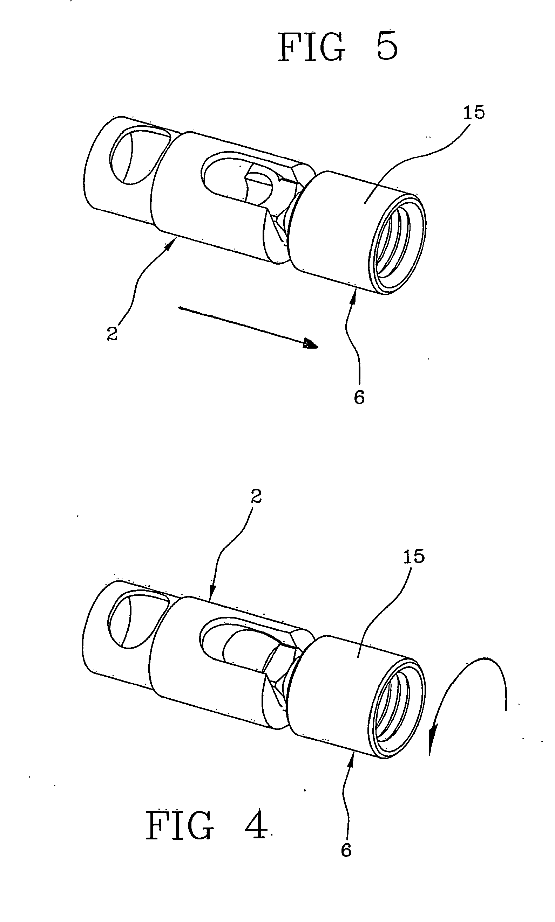

The first pair of flat faces 8a enables insertion into cavity 3, during assembling, also of the base portion 8 of root 7 through the front opening 4. This insertion is required to enable the above mentioned rotation of a quarter of a turn that, on the contrary, could not be carried out, should the flat faces 8a remain close to the rectilinear edges of the front opening 4 (Fig. 4).

Positioning of the front attachment element 6 in the central body 2 is completed by translation of the former relative to the latter in a direction opposite to the insertion one (see Fig. 5). This translation brings the expansions 9a of the end block 9 to match with the locating seat 10, and the second pair of flat faces 8b of the base portion 8 to come into contact with the front opening 4 edges.

Practically, the second pair of flat faces 8b enables the angular shiftings of the front attachment element 6 relative to the central body 2 to be guided through slipping along the edges of the front opening 4 and of the side split 11, thereby avoiding mutual rotations.

Alternatively, the articulation end block 9 could be inserted in the central body 2 through the side split 11 being part of the front opening 4. In this case the side split 11 could also be suitably shaped or widened at a predetermined region to enable easier passage of the root.

In addition, the front attachment element 6, on the opposite side relative to root 7, comprises a shank 13 in turn including a first portion 14 contiguous to root 7 and of sizes adapted to enable it to freely rotate internally of the front opening 4 during said rotation of a quarter of a turn in the assembling step (see Fig. 4).

Shank 13 also comprises a second portion 15 extending from the first portion 14 and adapted to have any size, for example an outer diameter of the same size as or bigger than the outer diameter of the central body (as shown in the accompanying drawings).

In other construction examples, not shown in the accompanying drawings, the shank portion 15 may have a threading of bigger outer diameter than the outer diameter of the central body 2 and an abutment collar of still bigger diameter. Or, at most, the shank portion 15 may be directly integrated into a lamp body, a spotlight for example, in which case it becomes the end portion of said spotlight.

Interposed between the rear attachment unit 12 and the end block 9 of the front attachment element 6 is a support washer 16 and a compression spring 17 exerting a thrust force adapted to create an appropriate friction between the locating seat 10 and the end block 9 itself, so as to lock the front attachment element to the desired angle relative to the longitudinal axis 2a of the central body 2.

The rear attachment unit 12 is rotatably and coaxially in engagement with the central body 2 and comprises a pivot pin 18 having a coupling portion 18a conforming in shape to the inner surface of the cavity of the central body 2. More specifically, the coupling portion 18a is insertable in said cavity through the rear opening 5 and can be rotatably engaged with the rear part of cavity 3 of the central body 2.

Also provided is locking means 19 adapted both to restrict the mutual rotation of the central body 2 itself and of the pivot pin 18 to approximately a round angle and to retain said component parts of the device therebetween in a longitudinal direction.

The locking means 19 is available internally of the central body 2 through a side opening 20 formed in the rear portion 5 of the central body itself and is practically defined by a retaining element 19a of cylindrical conformation, substantially similar to a tablet. The side opening 20, in turn, is covered by a tubular casing 21 to be externally coupled with the central body 2, to make the locking means 19 inaccessible.

The pivot pin 18 has an outer circular groove 22 comprising a bottom 22a and side walls 22b into which the tablet-shaped retaining element 19a can be slidably housed. The groove depth and the thickness of the retaining element 19a are of such a nature that the latter can laterally abut against an edge portion 20a of the side opening 20 without externally projecting from the central body 2.

Emerging from the side walls 22b are two opposite projections 22c adapted to form two pawls, i.e, a locating element against which the retaining element 19a can laterally abut to restrict mutual rotation of the central body 2 and the pivot pin 18.

Advantageously, each of the opposite projections 22c forms two opposite concavities 22d substantially of an arc-shaped conformation and of the same diameter as that of the retaining element 19a (see Fig. 6).

Practically, during rotation of the central body 2 relative to the pivot pin 18, the edge 20a of the side opening 20 drags along the retaining element 19a.

Rotation of the central body 2 is stopped when the retaining element 19a abuts against projections 22c.

In addition, the retaining element 19a by its abutting against the edge 20a of opening 20, axially retains the pivot pin 18 relative to the central body 2 against the action exerted thereon by spring 17.

In other words, the retaining element 19a is interposed between the central body 2 and pivot pin 18 restraining them from carrying out mutual axial shiftings, but enabling rotations between the same, that however are limited to about a round angle by projections 22c.

Advantageously, the rear attachment unit 12 comprises an attachment sleeve 23 for rigid engagement with a threaded end 18b of the pivot pin 18.

Preferably the attachment sleeve 23 is rigidly connected to the tubular casing 21. The latter is integrated into the sleeve 23 and rotatably coupled with the outer surface of the central body 2. Therefore the central body 2 is rotatably in engagement with the rear attachment unit 12 by a dual turning coupling obtained internally of the pivot pin 18 and externally of the tubular casing 21.

Finally, the attachment sleeve 23 at the back has a threaded end portion 23a and a circular abutment ridge 23b to be used for engagement with the bearing structure or base structure of a lighting apparatus.

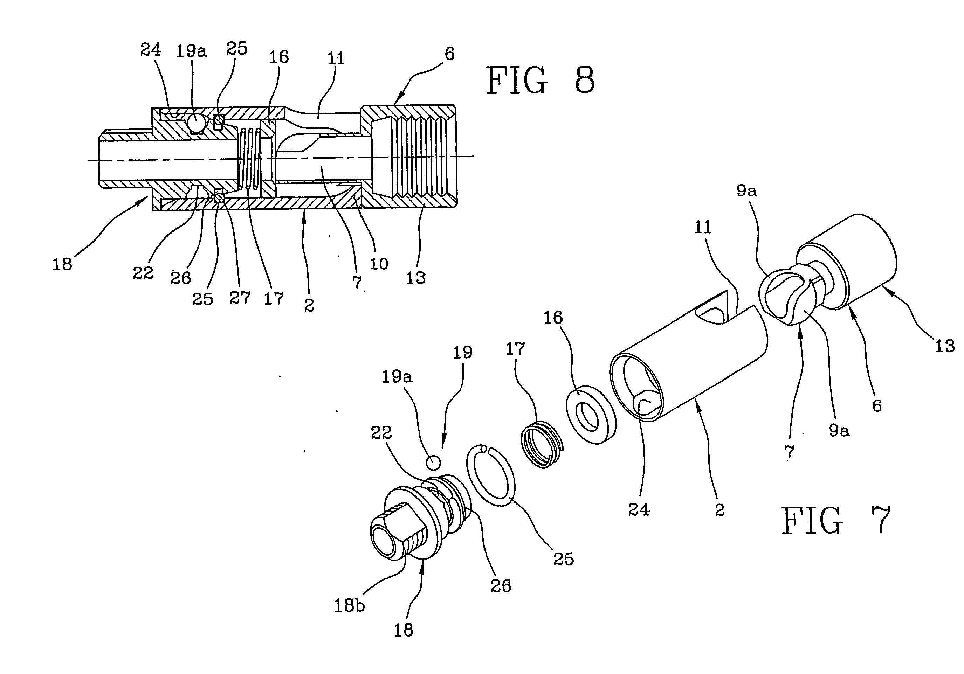

Shown in Figs. 7 and 8 is an alternative embodiment of the locking means 19.

In this case the locking means 19 comprises a retaining element 19a consisting of a small ball 19a and said means does not require the side opening 20 and tubular casing 21.

The central body 2 at the back has a housing seat 24 for the small ball 19a. The pivot pin 18 has an outer circular groove 22 inside which the ball-shaped retaining element 19a can be slidably housed.

Emerging from the side walls of groove 22 is at least one projection 22c adapted to form a pawl, i.e. a locating element against which the retaining element 19a can laterally abut to restrict the mutual rotation of the central body 2 and pivot pin 18.

Due to the depth of groove 22 and the diameter of the retaining element 19a, said retaining element keeps in place inside the housing seat 24 and cannot come out in the operating position, i.e. when the device is assembled (Fig. 8).

Practically, during rotation of the central body 2 relative to pin 18, the side walls of the housing seat 24 hold the retaining element 19a and cause rotation of same together with the central body 2. Rotation of the central body 2 is stopped when the retaining element 19a abuts against the projection 22c.

In this alternative embodiment the pivot pin 18 is maintained associated with the central body 2, against the action exerted on the pivot pin 18 by spring 17, through a locking element 25 such as a metallic retaining spring ring 25 of the Seeger type, which is disposed on a grooved seat 26 of pin 18 during the mounting step and elastically expands within a corresponding grooved seat 27 of the main body 2 when pin 18 is inserted in body 2.

This locking element 25 is interposed between the central body 2 and the pivot pin 18 and prevents them from carrying out mutual axial shiftings, while enabling rotation between the same but restricted to approximately a round angle by projection 22c

In this alternative embodiment the tubular casing 21 is no longer required, because practically the functions of said tubular casing 21 and those of the pivot pin 18 are performed by the pivot pin 18 alone.

The attachment sleeve 23 is therefore integrated into the pivot pin 18 so that it is coincident with the threaded end 18b.

Obviously all of the illustrated attachments can be made in an equivalent manner, both of the male and of the female type.

The invention achieves important advantages.

First of all, since the front attachment element during the assembling step is to be inserted in the cavity of the central body only at its root, while the shank of the same element must not pass through said central body, as in the known art, the conformation and sizes of said shank can be completely independent of those of the central body of the articulated device. Thus, it is for example possible to integrate the front attachment element and the lamp body of a lighting apparatus into a unitary body thereby avoiding possible tampering, because these components cannot be separated from each other. It will be also recognized that, should the front attachment element be provided with an attachment threading or in any case with a cylindrical shank, the latter will have the diameter that is judged the most appropriate from an operational point of view and, in addition, will not be submitted to lateral milling operations and/or can keep its original cylindrical conformation.

It is also to be pointed out that the articulated device in accordance with the invention has a rear attachment unit directly enabling rotations of the central body around the longitudinal axis and is also provided with locking means designed to restrain rotation of said central body, which means is not accessible by the user because it is completely inside the central body itself. This locking means is therefore able to offer a greater safety against possible tampering actions that could lead to dangerous twisting of the electric conductors longitudinally crossing all the device components. In addition the invention, by virtue of the particular conformation of the device, enables deterioration of the parts in sight, caused by use, to be reduced, and in particular of the root of the central body. Finally, the invention is of easy and cheap manufacture.

The invention as conceived is susceptible of many modifications and variations falling within the scope of the appended claims. All of the details can be replaced by other technically equivalent elements and practically all the materials employed and the sizes can be of any nature, depending on requirements.

## Claims

1. An articulated mechanical device, particularly for lighting apparatuses, comprising:
- a central body (2) having a front opening (4) provided with a side split (11) contiguous thereto, and a rear opening (5a);
- a front attachment element (6) having a root (7) consisting of a base portion (8) and an articulation end block (9), said end block (9) being insertable in a cavity (3) of the central body (2) and being susceptible of abutment against a locating seat (10) disposed in said cavity (3) and in the vicinity of the front opening (4) of said central body (2), so as to form a turning coupling therewith; said side split (11) in the extension of said front opening (4) being adapted to be passed through by the base portion (8) of the root (7) for angular shiftings of the front attachment element (6) relative to the central body (2); and
- a rear attachment unit (12) for engagement with a rear portion (5) of the central body (2) ;
**characterized in that** to obtain said turning coupling, said articulation end block (9) is insertable, in a first operating position of the front attachment element (6), in said front opening (4) of the central body (2), and is associable, in a second operating position of said front attachment element (6), with said locating seat (10).

2. A device as claimed in claim 1, **characterized in that** shifting between said first operating position and second operating position takes place by an angular rotation of the front attachment element (6) around its longitudinal axis.

3. A device as claimed in claim 2, **characterized in that** said central body (2) has a substantially tubular conformation and **in that** said articulation end block (9) of the front attachment element, in cross section relative to the longitudinal axis of said attachment element, has a flattened conformation the shape of which substantially matches that of said front opening (4) of the central body (2), so that during the assembling step at least the end block (9) can be submitted to insertion into the cavity (3) of said central body through said front opening (4) after longitudinal and front alignment of said front attachment element (6) with said central body (2), said end block (9) comprising two opposite expansions (9a) designed to mate with said locating seat (10) after said insertion of the end block itself and following at least one rotation of said front attachment element (6) about its longitudinal axis.

4. A device as claimed in claim 3, **characterized in that** said opposite expansions (9a) of said end block (9) are adapted to mate with said locating seat (10) following at least one rotation of said front attachment element (6) through a quarter of a turn about its longitudinal axis.

5. A device as claimed in claim 3 or 4, **characterized in that** said base portion (8) of the root (7) laterally has two pairs of opposite flat faces (8a, 8b) defining a substantially square cross section the side of which corresponds to the width of said front opening (4) and of said side split (11), so that a first one of said pairs of opposite faces (8a) during the assembling step allows insertion in the cavity (3), through said front opening, (4) also of the base portion (8) of the root to enable carrying out of said rotation of a quarter of a turn, and a second one of said pairs of opposite faces (8b) allows the angular shiftings of the front attachment element (6) relative to the central body (2) to be guided into contact with the edges of said front opening (4) and said side split (11), after the front attachment element (6), during the assembling step, has been moved relative to the central body (2) in a direction opposite to the insertion direction to bring said opposite expansions (9a) of the end block (9) to mate with said locating seat (10).

6. A device as claimed in claim 3, 4 or 5, **characterized in that** said front attachment element (6), on the opposite side from said root (7) comprises a shank (13) in turn including at least one first portion (14) contiguous to said root (7) and adapted to freely turn inside said front opening (4) during rotation, in the assembling step, of the front attachment element (6).

7. A device as claimed in claim 6, **characterized in that** said shank (13) of the front attachment element (6) comprises a second portion (15) extending from said first portion (14) and having an outer diameter of larger dimension than the outer diameter of the central body (2).

8. A device as claimed in claim 7, **characterized in that** said shank (13) of the front attachment element (6) is integrated with the lamp body of a lighting apparatus.

9. A device as claimed in anyone of the preceding claims, **characterized in that** said rear attachment unit (12) is in rotatable and coaxial engagement with said central body (2) and **in that** it comprises locking means (19) adapted to at least restrain the mutual rotation of said central body (2) and rear attachment unit (12) to approximately a round angle.

10. A device as claimed in claim 9, **characterized in that** said rear attachment unit (12) comprises a pivot pin (18) having a coupling portion (18a) insertable in said central body (2) through said rear opening (5a) and susceptible of rotatable engagement with the central body itself (2).

11. A device as claimed in claim 10, **characterized in that** said locking means (19) is also adapted to limit said pivot pin (18) and central body (2) in a longitudinal direction.

12. A device as claimed in claim 10 or 11, **characterized in that** said pivot pin (18) has an outer annular groove (22) and said locking means (19) comprises a retaining element (19a) to be slidably housed in said annular groove (22) between the bottom (22a) and side walls (22b) of said groove and **in that** at least one pawl (22c) is provided which is rigidly fastened to said pivot pin (18) internally of said groove (22) and is adapted to define a locating element against which said retaining element (19a) can laterally abut, so as to restrict the mutual rotation of said central body (2) and pivot pin (18).

13. A device as claimed in claim 12, **characterized in that** said locking means (19) comprises a housing seat (24) and **in that** said retaining element (19a) is susceptible of abutment against said housing seat (24) to limit the mutual rotation of said central body (2) and pivot pin (18).

14. A device as claimed in claim 13, **characterized in that** said retaining element (19a) is a small ball.

15. A device as claimed in anyone of claims 11 to 14, **characterized in that** said locking means (19) comprises a locking spring element (25) disposed between a grooved seat (26) of the pin (18) and a corresponding grooved seat (27) of the main body (2) to prevent axial moving away of same.

16. A device as claimed in anyone of claims 9 to 15, **characterized in that** said locking means (19) is available internally of said central body (2) through a side opening (20) formed in the rear portion (5) of said body and **in that** it comprises a tubular casing (21) to be externally coupled with said central body (2) and adapted to cover said side opening (20).

17. A device as claimed in claim 16, **characterized in that** said retaining element (19a) is adapted to laterally abut also against an edge portion (20a) of said side opening (20).

18. A device as claimed in anyone of claims 12 to 17, **characterized in that** said retaining element (19a) is defined by a cylindrical body substantially in the form of a tablet.

19. A device as claimed in anyone of claims 12 to 18, **characterized in that** said locating element (22c) for the retaining element (19a) is defined by a pair of opposite projections of the side walls (22b) of said annular groove (22), each projection forming two opposite concavities (22d) the shape of which substantially is based on the diameter of the retaining element (19a).

20. A device as claimed in anyone of claims 10 to 19, **characterized in that** said rear attachment unit (12) comprises an attachment sleeve (23) to be integrally engaged with the pivot pin (18).

21. A device as claimed in claim 20, **characterized in that** said tubular casing (21) is integral with said attachment sleeve (23) and rotatably coupled with the central body (2).

## Patentansprüche

1. Mechanische Gelenkvorrichtung, insbesondere für Beleuchtungsgeräte, umfassend:
- einen Mittelkörper (2) mit einer Vorderöffnung (4), die mit einer anliegenden Seitenspalte (11) ausgestattet ist, und einer Hinteröffnung (5a);
- ein Vorderbefestigungselement (6) mit einem Boden (7) umfassend einen Basisteil (8) und einen Gelenkendblock (9), wobei der Endblock (9) in einen Hohlraum (3) des Mittelkörpers (2) eingeführt werden kann und gegen einen Zentriersitz (10), der im benannten Hohlraum (3) und im Bereich der Vorderöffnung (4) des benannten Mittelkörpers (2) angeordnet ist, anschlagen kann, um eine Drehkopplung damit anzubieten; wobei die Seitenspalte (11) in einer Verlängerung der benannten Vorderöffnung (4) vom Basisteil (8) des Bodens (7) durchgegangen werden kann, für Winkelversetzungen des Vorderbefestigungselementes (6) relativ zum Mittelkörper (2); und
- eine Hinterbefestigungseinheit (12) zum Eingriff mit einem Hinterteil (5) des Mittelkörpers (2);
**dadurch gekennzeichnet, daß** zum Erhalten der benannten Drehkopplung der benannte Gelenkendblock (9) in einer ersten Betriebsstellung des Vorderbefestigungselementes (6) in die benannte Vorderöffnung (4) des Mittelkörpers (2) eingeführt und in einer zweiten Betriebsstellung des Vorderbefestigungselementes (6) mit dem benannten Zentriersitz (10) verbunden werden kann.

2. Vorrichtung nach Anspruch 1, **dadurch gekennzeichnet, daß** die Versetzung zwischen den benannten ersten Betriebsstellung und zweiten Betriebsstellung durch eine Winkeldrehung des Vorderbefestigungselementes (6) um seine Längsachse erfolgt.

3. Vorrichtung nach Anspruch 2 **dadurch gekennzeichnet, daß** der benannte Mittelkörper (2) eine wesentlich röhrenförmige Gestaltung besitzt, und daß der benannte Gelenkendblock (9) des Vorderbefestigungselementes im Querschnitt relativ zur Längsachse des benannten Befestigungselementes eine flache Gestaltung besitzt, deren Form der Form der benannten Vorderöffnung (4) des Mittelkörpers (2) wesentlich entspricht, so daß während des Montageschrittes mindestens der Endblock (9) in den Hohlraum (3) des benannten Mittelkörpers durch die benannte Vorderöffnung (4) nach einer Längs- und Vorderausrichtung des benannten Vorderbefestigungselementes (6) mit dem benannten Mittelkörper (2) eingeführt werden kann, wobei der Endblock (9) zwei entgegengesetzte Erweiterungen (9a) umfasst, zur Kopplung mit dem benannten Zentriersitz (10) nach der benannten Einführung des Endblockes und nach mindestens einer Drehung des benannten Vorderbefestigungselementes (6) um seine Längsachse.

4. Vorrichtung nach Anspruch 3, **dadurch gekennzeichnet, daß** die benannten entgegengesetzten Erweiterungen (9a) des benannten Endblockes (9) zur Kopplung mit dem benannten Zentriersitz (10) vorgesehen sind, nach mindestens einer Drehung von einem Viertels Umdrehung des benannten Vorderbefestigungselementes (6) um seine Längsachse.

5. Vorrichtung nach Anspruch 3 oder 4, **dadurch gekennzeichnet, daß** der benannte Basisteil (8) des Bodens (7) zwei Paare von entgegengesetzten Flachflächen (8a, 8b) seitlich aufweist, die einen wesentlich rechteckigen Querschnitt definieren, dessen Seite der Breite der benannten Vorderöffnung (4) und der benannten Seitenspalte (11) entspricht, so daß ein erstes der benannten Paare von entgegengesetzten Flächen (8a) während des Montageschrittes die Einführung in den Hohlraum (3) durch die benannte Vorderöffnung (4) ebenfalls des Basisteils (8) des Bodens erstattet, um die benannte Drehung von einem Viertel Umdrehung zu ermöglichen, und ein zweites der benannten Paare von entgegengesetzten Flächen (8b) die Winkelversetzungen des Vorderbefestigungselementes (6) relativ zum Mittelkörper (2) ermöglicht, zur Führung in Berührung mit den Rändern der benannten Vorderöffnung (4) und der benannten Seitenspalte (11), nachdem das Vorderbefestigungselement (6) während des Montageschrittes relativ zum Mittelkörper (2) in einer Richtung versetzt worden ist, die der Einführungsrichtung zur Kopplung der benannten entgegengesetzten Erweiterungen (9a) des Endblockes (9) mit dem Zentriersitz (10) abgewandt ist.

6. Vorrichtung nach Anspruch 3, 4 oder 5, **dadurch gekennzeichnet, daß** das benannte Vorderbefestigungselement (6) an der vom benannten Boden (7) abgewandten Seite einen Schaft (13) umfasst, der wiederum mindestens einen ersten am benannten Boden (7) anliegenden Teil (14) umfasst, der innerhalb der benannten Vorderöffnung (4) während der Drehung im Montageschritt des Vorderbefestigungselementes (6) frei drehen kann.

7. Vorrichtung nach Anspruch 6, **dadurch gekennzeichnet, daß** der benannte Schaft (13) des Vorderbefestigungselementes (6) einen zweiten Teil (15) umfasst, der sich vom benannten ersten Teil (14) erstreckt und einen Außendurchmesser besitzt, der größer ist als der Außendurchmesser des Mittelkörpers (2).

8. Vorrichtung nach Anspruch 7, **dadurch gekennzeichnet, daß** der benannte Schaft (13) des Vorderbefestigungselementes (6) mit dem Lampenkörpers eines Beleuchtungsgerät einstückig ist.

9. Vorrichtung nach irgendeinem der vorhergehenden Ansprüche, **dadurch gekennzeichnet, daß** die benannte Hinterbefestigungseinheit (12) mit dem benannten Mittelkörper (2) drehbar und koaxial eingreift, und daß sie Sperrmittel (19) umfasst, mindestens zur Beschränkung der gegenseitigen Drehung des benannten Mittelkörpers (2) und der benannten Hinterbefestigungseinheit (12) auf einen Vollwinkel.

10. Vorrichtung nach Anspruch 9, **dadurch gekennzeichnet, daß** die benannte Hinterbefestigungseinheit (12) einen Lagerbolzen (18) umfasst, mit einem Kopplungsteil (18a), der in den benannten Mittelkörper (2) durch die benannte Hinteröffnung (5a) eingeführt werden kann und mit dem Mittelkörper (2) drehbar eingreifen kann.

11. Vorrichtung nach Anspruch 10, **dadurch gekennzeichnet, daß** das benannte Sperrmittel (19) ebenfalls zur Beschränkung des benannten Lagerbolzens (18) und des benannten Mittelkörpers (2) in einer Längsrichtung vorgesehen ist.

12. Vorrichtung nach Anspruch 10 oder 11, **dadurch gekennzeichnet, daß** das benannte Lagerbolzen (18) eine ringförmige Außenrille (22) aufweist und das benannte Sperrmittel (19) ein Rückhalteelement (19a) zur gleitenden Aufnahme in der benannten ringförmigen Rille (22) zwischen dem Boden (22a) und den Seitenwänden (22b) der benannten Rille (22) umfasst, und daß mindestens eine Sperrzahn (22c) vorgesehen ist, die an den benannte Lagerbolzen (18) innerhalb der benannten Rille (22) steif befestigt ist und zur Definition eines Zentrierelementes geeignet ist, gegen das das benannte Rückhalteelement (19a) seitlich anschlagen kann, um die gegenseitige Drehung des benannten Mittelkörpers (2) und des benannten Lagerbolzens (18) zu beschränken.

13. Vorrichtung nach Anspruch 12, **dadurch gekennzeichnet, daß** das benannte Sperrmittel (19) einen Aufnahmesitz (24) umfasst, und daß das benannte Rückhaltelement (19a) gegen den benannten Aufnahmesitz (24) anschlagen kann, um die gegenseitige Drehung des benannten Mittelkörpers (2) und des benannten Lagerbolzens (18) zu beschränken.

14. Vorrichtung nach Anspruch 13, **dadurch gekennzeichnet, daß** das benannte Rückhaltelement (19a) ein Kügelchen ist.

15. Vorrichtung nach irgendeinem der Ansprüche 11 bis 14, **dadurch gekennzeichnet, daß** das benannte Sperrelement (19) ein Sperrfederelement (25) umfasst, das zwischen einem Rillensitz (26) des Bolzens (18) und einem entsprechenden Rillensitz (27) des Hauptkörpers (2) zur Verhinderung von axialen Versetzungen davon angeordnet ist.

16. Vorrichtung nach irgendeinem der Ansprüche 9 bis 15, **dadurch gekennzeichnet, daß** das benannte Sperrmittel (19) innerhalb des Mittelkörpers (2) durch eine Seitenöffnung (20), die im Hinterteil (5) des benannten Körpers ausgeformt ist, zugänglich ist, und daß es eine röhrenförmige Ummantelung (21) zur Außenkopplung mit dem benannten Mittelkörper (2) und zur Deckung der benannten Seitenöffnung (20) umfasst.

17. Vorrichtung nach Anspruch 16, **dadurch gekennzeichnet, daß** das benannte Rückhalteelement (19a) zum seitlichen Anschlagen ebenfalls gegen einen Randteil (20a) der benannten Seitenöffnung (20) vorgesehen ist.

18. Vorrichtung nach irgendeinem der Ansprüche 12 bis 17, **dadurch gekennzeichnet, daß** das benannte Rückhalteelement (19a) durch einen zylindrischen, wesentlich tablettenförmigen Körper definiert ist.

19. Vorrichtung nach irgendeinem der Ansprüche 12 bis 18, **dadurch gekennzeichnet, daß** das Zentrierelement (22c) für das Rückhalteelement (19a) durch ein Paar von entgegengesetzten Vorsprüngen der Seitenwände (22b) der benannten Ringrille (22) definiert ist, wobei jeder Vorsprung zwei entgegengesetzten Wölbungen (22d) bildet, deren Form sich auf dem Durchmesser des Rückhalteelementes (19a) wesentlich basiert.

20. Vorrichtung nach irgendeinem der Ansprüche 10 bis 19, **dadurch gekennzeichnet, daß** die benannten Hinterbefestigungseinheit (12) eine Befestigungshülse (23) zum einstückigen Eingriff mit dem Lagerbolzen (18) umfasst.

21. Vorrichtung nach Anspruch 20, **dadurch gekennzeichnet, daß** die benannten röhrenförmige Ummantelung (21) mit der benannten Befestigungshülse (23) einstückig und mit dem Mittelkörper (2) drehbar gekoppelt ist.

## Revendications

1. Dispositif mécanique articulé, en particulier pour des appareils d'éclairage, comprenant:
- un corps central (2) ayant une ouverture antérieure (4) munie d'une fente latérale (11) adjacente à celle-ci, et une ouverture postérieure (5a);
- un élément de fixation antérieur (6) ayant une base (7) se composant d'une portion de base (8) et d'un bloc d'extrémité d'articulation (9), ledit bloc d'extrémité (9) pouvant être inséré dans une cavité (3) du corps central (2) et pouvant aller en butée contre un siège de positionnement (10) logé dans ladite cavité (3) et proche de l'ouverture antérieure (4) dudit corps central (2), de façon à former un accouplement tournant avec celle-ci; ladite fente latérale (11) dans l'extension de ladite ouverture antérieure (4) étant apte à être traversée par la portion de base (8) de la base (7) pour des déplacements angulaires de l'élément de fixation antérieur (6) par rapport au corps central (2); et
- une unité de fixation postérieure (12) pour l'engagement avec une portion postérieure (5) du corps central (2);
**caractérisé en ce que**, afin d'obtenir ledit accouplement tournant, ledit bloc d'extrémité d'articulation (9) peut être inséré, dans une première position opérationnelle de l'élément de fixation antérieur (6), dans ladite ouverture antérieure (4) du corps central (2), et peut être associé, dans une deuxième position opérationnelle dudit élément de fixation antérieur (6), avec ledit siège de positionnement (10).

2. Dispositif selon la revendication 1, **caractérisé en ce que** le déplacement entre lesdites première position opérationnelle et deuxième position opérationnelle a lieu par une rotation angulaire de l'élément de fixation antérieur (6) autour de son axe longitudinal.

3. Dispositif selon la revendication 2, **caractérisé en ce que** ledit corps central (2) a une conformation substantiellement tubulaire et **en ce que** ledit bloc d'extrémité d'articulation (9) de l'élément de fixation antérieur, en section transversale par rapport à l'axe longitudinal dudit élément de fixation, a une configuration plate dont la forme correspond substantiellement à celle de ladite ouverture antérieur (4) du corps central (2), de sorte que pendant l'étape de montage au moins le bloc d'extrémité (9) peut être inséré dans la cavité (3) dudit corps central à travers ladite ouverture antérieure (4) après un alignement longitudinal et antérieur dudit élément de fixation antérieur (6) avec ledit corps central (2), ledit bloc d'extrémité (9) comprenant deux expansions opposées (9a) aptes à s'accoupler avec ledit siège de positionnement (10) après ladite insertion du bloc d'extrémité et après au moins une rotation dudit élément de fixation antérieur (6) autour de son axe longitudinal.

4. Dispositif selon la revendication 3, **caractérisé en ce que** lesdites expansions opposées (9a) dudit bloc d'extrémité (9) sont aptes à s'accoupler avec ledit siège de positionnement (10) après au moins une rotation dudit élément de fixation antérieur (6) d'un quart de tour autour de son axe longitudinal.

5. Dispositif selon la revendication 3 ou 4, **caractérisé en ce que** ladite portion de base (8) de la base (7) présente latéralement deux paires de surfaces plates opposées (8a, 8b) définissant une section transversale substantiellement carrée dont le côté correspond à la largeur de ladite ouverture antérieure (4) et de ladite fente latérale (11), de sorte que une première desdites paires de surfaces opposées (8a) pendant l'étape de montage permet l'insertion dans la cavité (3), à travers ladite ouverture antérieure (4), également de la portion de base (8) de la base afin de permettre ladite rotation d'un quart de tour, et une deuxième desdites paires de surfaces opposées (8b) permet les déplacements angulaires de l'élément de fixation antérieur (6) par rapport au corps central (2) pour être guidé en contact avec les bords de ladite ouverture antérieure (4) et de ladite fente latérale (11), après que l'élément de fixation antérieur (6), pendant l'étape de montage, a été déplacé par rapport au corps central (2) dans une direction opposée à la direction d'insertion pour accoupler lesdites expansions opposées (9a) du bloc d'extrémité (9) audit siège de positionnement (10).

6. Dispositif selon la revendication 3, 4 ou 5, **caractérisé en ce que** ledit élément de fixation antérieur (6), sur le côté opposé à ladite base (7), comprend une tige (13) comprenant à son tour au moins une première portion (14) adjacente à ladite base (7) et apte à tourner librement dans ladite ouverture antérieure (4) pendant la rotation de l'élément de fixation antérieur (6) dans l'étape de montage.

7. Dispositif selon la revendication 6, **caractérisé en ce que** ladite tige (13) de l'élément de fixation antérieur (6) comprend une deuxième portion (15) s'étendant de ladite première portion (14) et ayant un diamètre extérieur plus grand que le diamètre extérieur du corps central (2).

8. Dispositif selon la revendication 7, **caractérisé en ce que** ladite tige (13) de l'élément de fixation antérieur (6) est solidaire au corps de lampe d'un appareil d'éclairage.

9. Dispositif selon une quelconque des revendications précédentes, **caractérisé en ce que** ladite unité de fixation postérieure (12) est en engagement tournant et coaxial avec ledit corps central (2), et **en ce que** elle comprend des moyens de blocage (19) aptes au moins à limiter la rotation mutuelle dudit corps central (2) et de ladite unité de fixation postérieure (12) à environ un angle plein.

10. Dispositif selon la revendication 9, **caractérisé en ce que** ladite unité de fixation antérieure (12) comprend un pivot (18) ayant une portion d'accouplement (18a) pouvant être insérée dans ledit corps central (2) à travers ladite ouverture postérieure (5a) et pouvant être engagée de façon tournante avec le corps central (2).

11. Dispositif selon la revendication 10, **caractérisé en ce que** ledit moyen de blocage (19) est également apte à limiter ledit pivot (18) et ledit corps central (2) dans une direction longitudinale.

12. Dispositif selon la revendication 10 ou 11, **caractérisé en ce que** ledit pivot (18) présente une rainure annulaire extérieure (22) et ledit moyen de blocage (19) comprend un élément de retenue (19a) pour être logé de façon glissante dans ladite rainure annulaire (22) entre le fond (22a) et les parois latérales (22b) de ladite rainure, et **en ce que** il est prévu au moins un cliquet (22c) rigidement fixé audit pivot (18) à l'intérieur de ladite rainure (22) et apte à définir un élément de positionnement contre lequel ledit élément de retenue (19a) peut aller en butée latérale, afin de limiter la rotation mutuelle dudit corps central (2) et dudit pivot (18).

13. Dispositif selon la revendication 12, **caractérisé en ce que** ledit moyen de blocage (19) comprend un siège de logement (24), et **en ce que** ledit élément de retenue (19a) peut aller en butée contre ledit siège de logement (24) pour limiter la rotation mutuelle dudit corps central (2) et dudit pivot (18).

14. Dispositif selon la revendication 13, **caractérisé en ce que** ledit élément de retenue (18a) est une petite sphère.

15. Dispositif selon une quelconque des revendications 11 à 14, **caractérisé en ce que** ledit moyen de blocage (19) comprend un élément à ressort de blocage (25) logé entre un siège rainuré (26) du pivot (18) et un siège rainuré correspondant (27) du corps principal (2) pour éviter le déplacement axial de celui-ci.

16. Dispositif selon une quelconque des revendications 9 à 15, **caractérisé en ce que** ledit moyen de blocage (19) est accessible à l'intérieur dudit corps central (2) à travers une ouverture latérale (20) formée dans la portion postérieure (5) dudit corps, et **en ce que** il comprend une enveloppe tubulaire (21) apte à être accouplée à l'extérieur avec ledit corps central (2) et apte à couvrir ladite ouverture latérale (20).

17. Dispositif selon la revendication 16, **caractérisé en ce que** ledit élément de retenue (19a) est apte à aller en butée latérale également contre une portion de bord (20a) de ladite ouverture latérale (20).

18. Dispositif selon une quelconque des revendications 12 à 17, **caractérisé en ce que** ledit élément de retenue (19a) est défini par un corps cylindrique ayant substantiellement la forme d'une pastille.

19. Dispositif selon une quelconque des revendications 12 à 18, **caractérisé en ce que** ledit élément de positionnement (22c) pour l'élément de retenue (19a) est défini par une paire de saillies opposées des parois latérales (22b) de ladite rainure annulaire (22), chaque saillie formant deux concavités opposées (22d) dont la forme est basée substantiellement sur le diamètre de l'élément de retenue (19a).

20. Dispositif selon une quelconque des revendications 10 à 19, **caractérisé en ce que** ladite unité de fixation postérieure (12) comprend un manchon de fixation (23) apte à être engagé de façon solidaire avec le pivot (18).

21. Dispositif selon la revendication 20, **caractérisé en ce que** ladite enveloppe tubulaire (21) est solidaire avec ledit manchon de fixation (23) et accouplée de façon tournante avec le corps central (2).
